## Europäisches Patentamt

## European Patent Office

## Office européen des brevets

(19)

(11) Veröffentlichungsnummer: **0 177 680**
**B1**

(12) # EUROPÄISCHE PATENTSCHRIFT

(45) Veröffentlichungstag der Patentschrift:
25.01.89

(21) Anmeldenummer: 85108460.8

(22) Anmeldetag: 08.07.85

(51) Int. Cl.⁴: **H 01 B 17/14**, H 01 H 33/42, G 02 B 6/04

(54) **Elektrische Isolatorsäule.**

(30) Priorität: 18.07.84 DE 3426536

(43) Veröffentlichungstag der Anmeldung:
16.04.86 Patentblatt 86/16

(45) Bekanntmachung des Hinweises auf die Patenterteilung:
25.01.89 Patentblatt 89/4

(84) Benannte Vertragsstaaten:
AT CH DE FR GB LI SE

(56) Entgegenhaltungen:
CH-A-434 420
DE-A-2 017 283
DE-A-2 901 872
FR-A-872 753
FR-A-2 118 991
US-A-3 509 267

(73) Patentinhaber: **Siemens Aktiengesellschaft Berlin und München, Wittelsbacherplatz 2, D-8000 München 2 (DE)**

(72) Erfinder: **Salanki, Tibor, Dr., Kulmbacher Strasse 1, D-8520 Erlangen (DE)**
Erfinder: **Hess, Norbert, Hauptstrasse 62, D-8551 Wiesenthau (DE)**

**Beschreibung**

Die vorliegende Erfindung bezieht sich auf eine elektrische Isolatorsäule, besteht aus mindestens einem mit Isoliermittel gefüllten Hohlisolator als Träger einer gegenüber einem elektrischen Bezugspotential hochspannungsführenden Baugruppe (Siehe CH-A-434 420).

Derartige elektrische Isolatorsäulen sind als Träger von mit Hochspannung beaufschlagten Bauelementen handelsüblich. Sofern vom Ort des Bezugspotentials her Steuersignale an die mit Hochspannung beaufschlagten Bauelemente zu führen ist oder sofern von diesen Rückmeldesignale zu melden sind, ist es möglich, zur Signalübertragung Lichtwellenleiter einzusetzen (Siehe DE-A-2 901 872).

Aufgabe der Erfindung ist es, eine elektrische Isolatorsäule der eingangs genannten Art so auszubilden, daß die Lichtwellenleiter mechanisch geschützt und ohne Verminderung der Spannungsfestigkeit der Anordnung vom Ort des Bezugspotentials zum Ort der Hochspannung geführt werden können.

Gemäß der Erfindung wird diese Aufgabe dadurch gelöst, daß hermetisch dicht durch die Isolatorsäule mindestens ein Lichtwellenleiter geführt ist, der an einem in der Isolatorsäule fest angeordneten Trägerelement mit elektrisch begrenzt leitfähiger Oberfläche fixiert ist, wobei das Trägerelement am Ort des Bezugspotentials mit Bezugspotential speisbar ist und am Ort der Baugruppe mit Hochspannung beaufschlagbar ist.

Dadurch wird eine gleichmäßige Spannungsverteilung längs jedes Lichtwellenleiters ermöglicht, die noch dadurch gesteigert werden kann, daß gemäß einer vorteilhaften Ausbildung der Erfindung das Material der Oberfläche des Trägerelementes mit steigender elektrischer Feldstärke sinkenden spezifischen Widerstand aufweist. Ferner ist eine geradlinige, ungewendelte Lichtwellenleiterführung möglich. Eine Wendelung würde zwar im Sinne der Spannungsfestigkeit von Vorteil sein, jedoch wäre eine dazu erforderliche Lichtwellenleiterverformung aus mechanischen und übertragungstechnischen Gründen heraus nachteilig, insbesondere würde die größere Länge eines gewendelten Lichtwellenleiters gegenüber einer geradlinigen Verlegung die Dämpfung des Übertragungsweges erheblich steigern.

Durch die Isolatorsäule kann ferner mindestens eine gegenüber dem Isoliermittel hermetisch dichte, elektrisch nicht leitende Rohrleitung gewendelt vom Ort des Bezugspotentials zum Ort der Baugruppe geführt sein. Dadurch ist neben der Lichtübertragung auch der Transport eines Mediums möglich, dessen Spannungsfestigkeit geringer ist als die Spannungsfestigkeit des in jedem Hohlisolator vorgesehenen Isoliermittels.

Die Rohrleitung kann dabei in ihrer Lage durch das Trägerelement fixiert sein, wodurch eine Reduzierung der mechanischen Belastung auf die Rohrleitung möglich ist.

Ein Ausführungsbeispiel der Erfindung ist in der Zeichnung dargestellt und wird im folgenden näher erläutert.

Dabei zeigen:

Fig. 1 eine Außenansicht der Isolatorsäule und

Fig. 2 die Elemente im Inneren der Isolatorsäule.

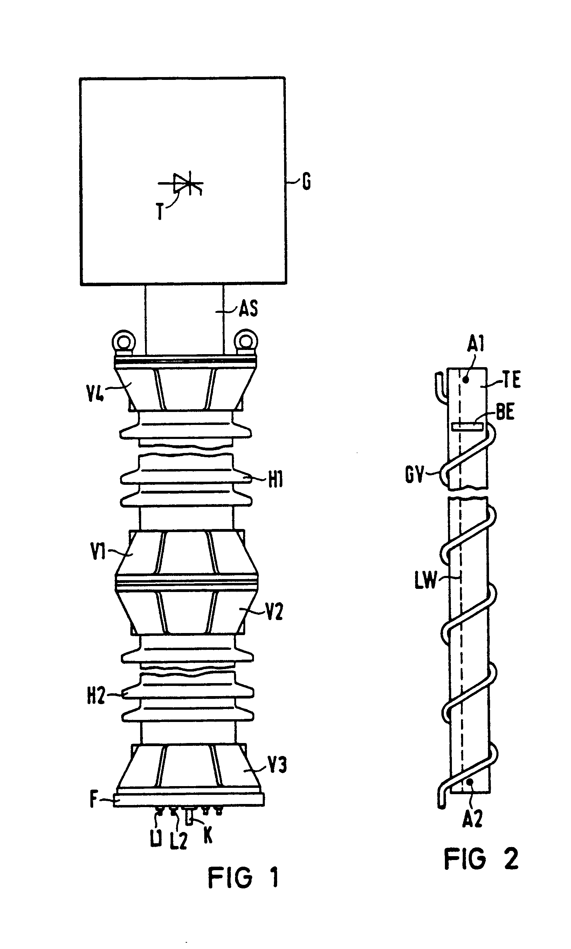

In der Darstellung gemäß Fig. 1 ist eine Isolatorsäule gezeigt, die aus der Übersichtlichkeit halber nur abschnittsweise gezeigten mit Isoliergas, z. B.komprimiertem Stickstoff, gefüllten Hohlraumisolatoren H1 und H2 besteht, die jeweils über Verbindungsstücke V1 und V2 gasdicht miteinander verbunden sind. Das dem Hohlraumisolator H1 abgewandte Ende des Hohlraumisolators H2 trägt im Anschluß an ein Verbindungsstück V3 einen Flansch F, an dem gasdichte Lichtleiterkupplungen, z. B. die Lichtleiterkupplungen L1 und L2, sowie eine ebenfalls gasdichte Kupplung K für eine im folgenden noch zu erläuternde Gasversorgung mit geringem atmosphärischen Überdruck angeordnet sind. Das dem Hohlraumisolator H2 abgewandte Ende des Hohlraumisolators H1 trägt ein Verbindungsstück V4, an dem wiederum ein Anschlußstück AS befestigt ist, das mit einem hermetisch nicht dichten Gehäuse G als Träger von elektrischen Baugruppen, die beispielsweise Thyristoren T beinhalten können, dichtend verbunden ist. Das Anschlußstück AS dichtet die Isolatorsäule völlig ab und dient auch zur dichtenden Durchführung der Gasversorgung und der Lichtwellenleiter. Die Durchführungen sind der Übersichtlichkeit halber nicht dargestellt.

In der Darstellung gemäß Fig. 2 sind skizziert diejenigen Elemente angedeutet, die dazu dienen, die über die Lichtleiterkupplungen L1 und L2 zugeführte Lichtsignale zu den im Gehäuse G angeordneten Baugruppen zu übertragen und die dazu vorgesehen sind, Luft mit einem gegenüber der freien Atmosphäre geringem Überdruck in das Gehäuse G zu übertragen.

Bei diesen Elementen handelt es sich u.a. um ein Trägerelement TE, das linealförmige Gestalt aufweist und im Inneren der Isolatorsäule beispielsweise über Distanzscheiben geführt ist. Um das Trägerelement TE ist ein Gasversorgungsrohr GV aus Isoliermaterial gewendelt. Ferner sind längs des Trägerelementes TE eine Vielzahl von Lichtwellenleiter, von denen nur der Lichtwellenleiter LW gestrichelt angedeutet ist, verlegt. Die Fixierung der Lichtwellenleiter, so auch des Lichtwellenleiters LW, erfolgt mit Hilfe von kontaktierenden Befestigungselemente BE, von denen der Übersichtlichkeit halber nur eines dargestellt ist. Das Trägerelement TE besteht aus Isoliermaterial, das mit einem elektrisch begrenzt leitfähigen Lack überzogen ist, wobei der spezifische Widerstand des Lackes mit steigender Feldstärke sinkt. Dadurch ist gewährleistet, daß eine gleichmäßige Spannungsbelastung sowohl längs der Lichtwellenleiter, z. B. des Lichtwellenleiters LW, als auch längs des Gasversorgungsrohrs GV vorliegt. Dazu ist das verkürzt dargestellte Trägerelement TE an der elektrisches Bezugspotential führenden Seite über einen Anschluß A2 mit diesem Bezugspotential verbunden und an der hochspannungsführenden Seite über einen Anschluß A1 mit der Hochspannung beaufschlagt.

**Patentansprüche**

1. Elektrische Isolatorsäule, bestehend aus mindestens einem mit Isoliermittel gefüllten Hohlisolator (H1, H2) als Träger einer gegenüber einem elektrischen Bezugspotential hochspannungsführenden Baugruppe (G, T) dadurch gekennzeichnet, daß hermetisch dicht durch die Isolatorsäule (H1, H2) mindestens ein Lichtwellenleiter (LW) geführt ist, der an einem in der Isolatorsäule (H1, H2) fest angeordneten Trägerelement (TE) mit elektrisch begrenzt leitfähiger Oberfläche fixiert ist, wobei das Trägerelement (TE) am Ort des Bezugspotentials mit Bezugspotential speisbar ist und am Ort der Baugruppe (G, T) mit Hochspannung beaufschlagbar ist.

2. Isolatorsäule nach Anspruch 1, dadurch gekennzeichnet, daß das Material der Oberfläche des Trägerelementes (TE) einen mit steigender elektrischer Feldstärke sinkenden spezifischen Widerstand aufweist.

3. Isolatorsäule nach Anspruch 1 oder 2, dadurch gekennzeichnet, daß durch die Isolatorsäule (H1, H2) mindestens eine gegenüber dem Isoliermittel hermetisch dichte, elektrisch nicht leitende Rohrleitung (GV) gewendelt vom Ort des Bezugspotentials zum Ort der Baugruppe (G, T) geführt ist.

4. Isolatorsäule nach Anspruch 3, dadurch gekennzeichnet, daß die Rohrleitung (GV) in ihrer Lage durch das Trägerelement (TE) fixiert ist.

**Claims**

1. Electrically insulating column consisting of at least one hollow insulator (H1, H2) filled with insulating material as a carrier of an assembly (G, T) conducting high voltage in relation to an electric reference potential, characterised in that there is guided through the insulating column (H1, H2) in a hermetically sealed manner at least one light waveguide (LW) which is fixed on a carrier element (TE) which is fixedly arranged in the insulating column (H1, H2) and has a surface which is electrically conductive to a limited extent, it being possible to feed the carrier element (TE) at the location of the reference potential with reference potential and for high voltage to act upon said carrier element at the location of the assembly (G, T).

2. Insulating column according to claim 1, characterised in that the material of the surface of the carrier element (TE) has a specific resistance which drops with increasing electric field strength.

3. Insulating column according to claim 1 or 2, characterised in that there is guided through the insulating column (H1, H2) at least one electrically non-conductive pipeline (GV) which is hermetically sealed in relation to the insulating material and is coiled from the location of the reference potential to the location of the assembly (G, T).

4. Insulating column according to claim 3, characterised in that the pipeline (GV) is fixed in its position by means of the carrier element (TE).

**Revendications**

1. Colonne d'isolateur électrique, constituée par au moins un isolateur creux (H1, H2) rempli par un milieu isolant et servant de support d'un module (G,T) chargé par une haute tension par rapport à un potentiel de référence électrique, caractérisée par le fait que la colonne d'isolateur (H1, H2) est traversée d'une manière parfaitement étanche par au moins un guide d'ondes optiques (LW), qui est fixé sur un élément de support (TE) monté fixe dans la colonne d'isolateur (H1, H2) et possédant une surface réalisant une conduction électrique limitée, l'élément de support (TE) pouvant être alimenté par le potentiel de référence à l'emplacement du potentiel de référence et pouvant être chargé par une haute tension a l'emplacement du module (G,T).

2. Colonne d'isolateur suivant la revendication 1, caractérisé par le fait que le matériau de la surface de l'élément de support (TE) possède une résistance spécifique, qui diminue lorsque l'intensité de champ électrique augmente.

3. Colonne d'isolateur suivant la revendication 1 ou 2, caractérisée par le fait qu'une canalisation tubulaire (GV) absolument étanche par rapport au milieu isolant et non conductrice du point de vue électrique, traverse la colonne d'isolateur (H1, H2) en étant enroulée sous forme hélicoïdale depuis l'emplacement du potentiel de référence jusqu'à l'emplacement du module (G,T).

4. Colonne d'isolateur suivant la revendication 3, caractérisée par le fait que la canalisation tubulaire (GV) est fixée, en position, au moyen de l'élément de support (TE).

FIG 1

FIG 2